# EUROPEAN PATENT APPLICATION

(11) **EP 4 847 957 A1**
(43) Date of publication of application: **02.12.2026**
(21) Application number: 25305751.7
(22) Date of filing: 26.05.2025
(51) Int. Cl.: G01S 13/34, G01S 13/87, G01S 13/931

(54) **RADAR SYSTEM WITH MULTIPLE OPERATING MODES**

(71) Applicant: NXP USA, Inc., Austin, TX 78735 (US)
(72) Inventor: PAVAO MOREIRA, Cristian, 31023 Toulouse (FR); ZANATI, Abdellatif, 5656AG Eindhoven (NL)
(74) Representative: Schwarzweller, Thomas

(57) **Abstract**

The present disclosure relates to a radar system and related method by which, in a first mode, a leader device and a follower device of the radar system may transmit first radar signals during a first part of a radar cycle, and in a second mode, the leader device may transmit second radar signals while the follower device is in a standby state. Digital signal processing circuitry of a microcontroller unit coupled to the leader and follower devices may generate first processed radar data based on reflections of the first radar signals. Digital signal processing circuitry of the leader device may generate second processed radar data based on reflections of the second radar signals.

## Description

### TECHNICAL FIELD

Embodiments of the subject matter described herein relate generally to radar systems, including automotive radar systems, cascaded radar systems, or the like.

### BACKGROUND

Automotive radar solutions for advanced driver assistance systems (ADAS) are currently being deployed on a large scale, and are typically implemented as long-range radar (LRR) applications or short-range radar (SRR) applications. Both of these applications typically use frequency modulated continuous wave (FMCW) modulation techniques in order to be able to identify objects in the vicinity of the radar system, such as a vehicle or a pedestrian. Such radar systems typically utilize millimeter wave (mmWave) frequencies for transmission and reception or radar signals. Automotive radar systems may be implemented as cascaded radar systems having distributed radar devices, which may include a leader and one or more followers. The leader may supply clock and local oscillator (LO) signals to the followers to achieve synchronization and coherency.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

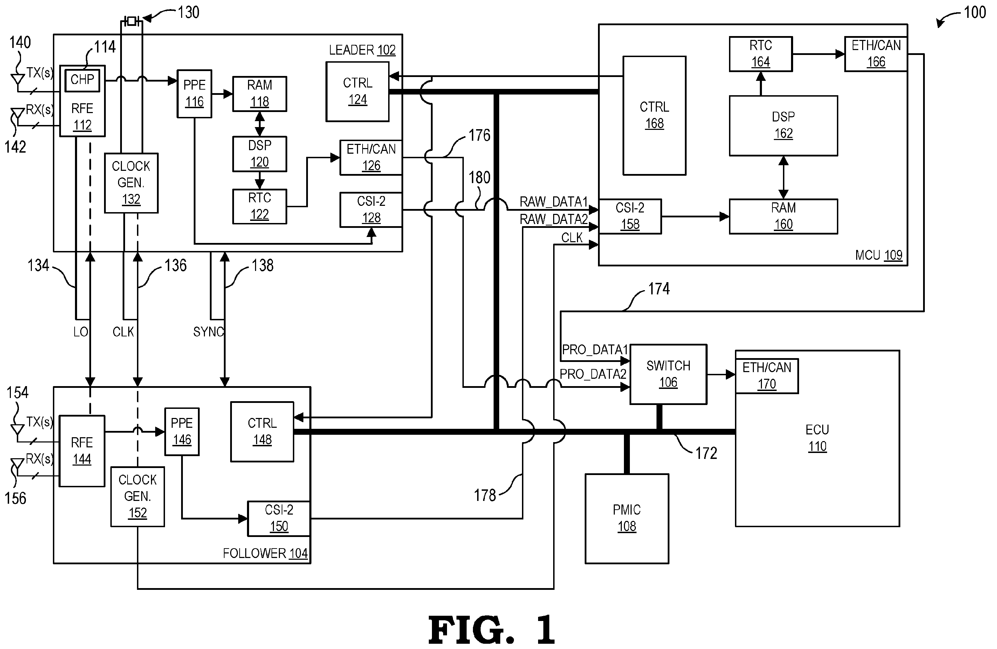

FIG. 1 shows an illustrative circuit diagram of a cascaded radar system including a leader device having integrated digital signal processing circuitry, a follower device, and a separate microcontroller unit (MCU) having digital signal processor circuitry, in accordance with various embodiments;

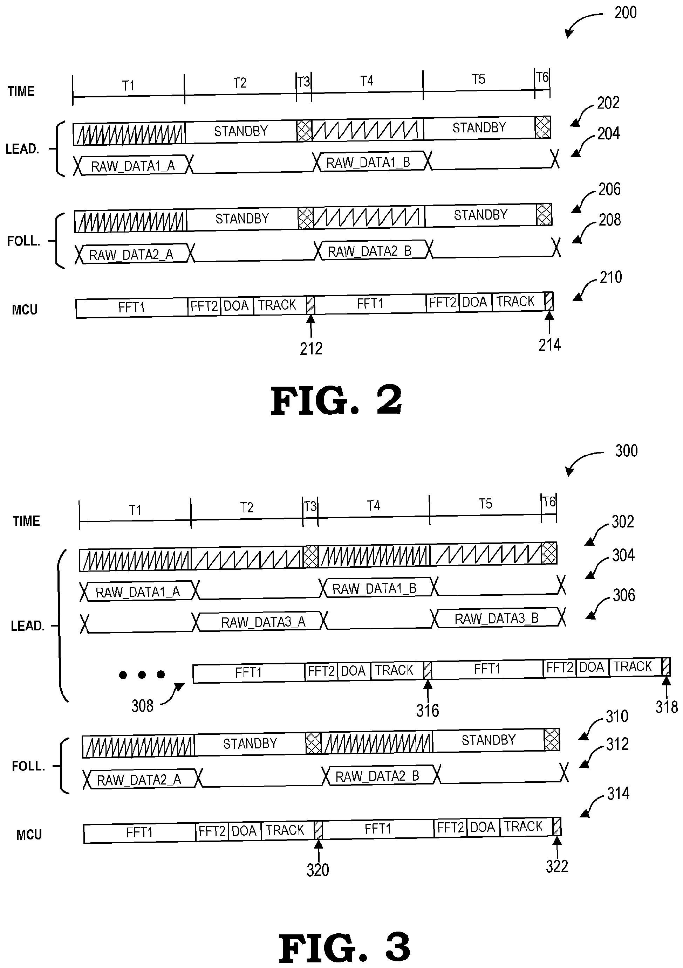

FIG. 2 shows a timing diagram representing a method of operation of a cascaded radar system, such as the cascaded radar system of FIG. 1, where the radar system does not transmit or receive radar signals during only a portion (e.g., half) of the radar cycle;
FIG. 3 shows an illustrative timing diagram representing a method of operation of a cascaded radar system, such as the cascaded radar system of FIG. 1, where the radar system operates in a first operating mode during a first part of each radar cycle and a second operating mode during a second part of each radar cycle, such that the radar system transmits and receives radar signals during the entire radar cycle, in accordance with various embodiments; and

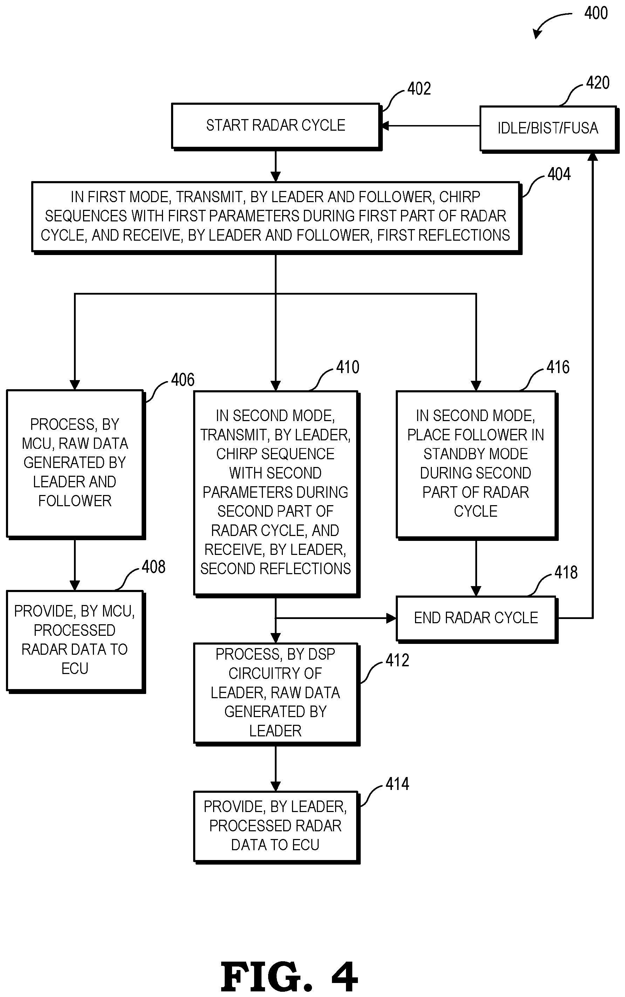

FIG. 4 shows a process flow for an illustrative method of operating a radar system, such as the method represented in FIG. 3, where the radar system operates in a first operating mode during a first part of each radar cycle and a second operating mode during a second part of each radar cycle, such that the radar system transmits and receives radar signals during the entire radar cycle, in accordance with various embodiments.

### DETAILED DESCRIPTION

The following detailed description is merely illustrative in nature and is not intended to limit the embodiments described herein and uses of such embodiments. Furthermore, there is no intention to be bound by any expressed or implied theory presented in the preceding technical field, background, or the following detailed description.

For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Various embodiments described herein relate to radar systems, such as automotive radar systems with cascaded arrangements, where a leader device of such a radar system includes both radar front-end (RFE) circuitry and digital signal processing (DSP) circuitry, a follower device of the radar system includes RFE circuitry and may be implemented without DSP circuitry, and the radar system includes a microcontroller unit (MCU) or other processing circuitry that is separate from the leader and follower devices. The radar system may operate in different modes during different parts of a given radar cycle. For example, during a first part (e.g., first half) of a radar cycle, the radar system may operate in a first mode in which RFE circuitries of the leader and follower devices transmit respective chirp sequences and receive corresponding reflections (e.g., reflections of the transmitted chirp sequences; sometimes referred to as "reflected radar signals"), and the DSP circuitry of the MCU processes raw analog-to-digital converter (ADC) data representing the reflections received by both the leader devices and the follower device to perform object detection and tracking. In a part (e.g., second half) of the radar cycle, the radar system may operate in a second mode in which the RFE circuitry of the leader device transmits a chirp sequence and receives corresponding reflections while the follower device is in a standby state, and DSP circuitry of the leader device processes raw ADC data representing the reflections received by the leader device to perform object detection and tracking. The DSP circuitry of the MCU may perform object detection and tracking processing in parallel with the transmission of the chirp sequence by the leader device during the second part of the radar cycle.

Herein, a "radar cycle" refers to a period of time during the operation of a radar system during which the radar system transmits one or more sequences of radar signals (e.g., chirps), receives corresponding reflections, and processes data representing the received reflections. Radar cycles are typically separated by idle periods, where built-in self-test (BIST) or functional safety (FuSa) processes may be performed during such idle periods. Herein, "raw" data refers to data that has not yet undergone digital signal processing (e.g., by DSP circuitry of the leader or the MCU).

Conventional radar systems with cascaded arrangements typically include leader and follower devices having only RFE circuitry, where all digital signal processing of reflected radar signals received by the leader and follower devices is performed by an MCU that is separate from the leader and follower devices. The leader and follower devices of such conventional radar systems are typically required to remain in a standby state for a period following chirp sequence transmission to allow the MCU to finish processing the received radar data, such that the radar system is not sensing during a relatively large period of time (e.g., half the duration of the radar cycle). Fully duplicating the MCU hardware to attempt to reduce this standby period is not feasible due to increased size, power dissipation, and cost associated with such a solution.

Embodiments herein address these challenges by providing a leader device in the radar system that includes both RFE circuitry and integrated DSP circuitry as part of a single device such as, for example, a System on a Chip (SoC), at least one separate follower device that includes RFE circuitry, and an MCU that includes DSP circuitry, and by operating the radar system in first and second modes during first and second parts of the radar cycle. The radar system operates as a cascaded radar system in the first mode during the first part (e.g., first half) of the radar cycle, with RFE circuitries of both the leader and follower devices transmitting respective chirp sequences, receiving corresponding reflections, and generating raw ADC data representing the reflections. This raw ADC data is then processed by a separate MCU containing first DSP circuitry to generate one or more point clouds or object lists corresponding to objects detected based on the received reflections. In the second part of the radar cycle, and while the first DSP circuitry processes the raw ADC data that was generated during the first part of the radar cycle, the radar system operates in the second mode in which the follower device is in a standby state and the leader device transmits another chirp sequence, receives corresponding reflections, and processes the reflections using second DSP circuitry that is included in the SoC of the leader device to generate one or more point clouds or object lists corresponding to objects detected based on the received reflections. In one or more embodiments, the first DSP circuitry may be larger than the second DSP circuitry with comparatively greater processing capability (e.g., more processing cores or greater processor clock speed, as non-limiting examples), while still suitable for processing the raw ADC data generated by the RFE circuitry of the leader device, such that the footprint, cost, and power dissipation of the second DSP circuitry are less than that of the first DSP circuitry. In one or more embodiments, chirp sequences transmitted by the leader device during the second part of the radar cycle may be shorter range with wider field of view (FOV) compared to those transmitted during the first part of the radar cycle, which may further reduce the operating requirements of the second DSP circuitry of the leader device. In this way, radar systems according to embodiments described herein may provide an increased duty cycle (e.g., 100 percent duty cycle) compared to conventional cascaded radar systems having comparatively lower duty cycles having comparatively lower duty cycles (e.g., 50 percent duty cycle). Herein, the "duty cycle" of a radar system within a particular radar cycle refers to the percentage of the radar cycle in which the radar system is configured to transmit and receive radar signals (e.g., to transmit chirps and receive reflections).

For example, a radar system that transmits radar signals and receives reflections in a first half of the radar cycle and that is in a standby state with no radar signal transmission in a second half of the radar cycle is considered to have a 50 percent duty cycle, while a radar system that actively transmits one or more radar signals throughout the entire duration of the radar cycle is considered to have a 100 percent duty cycle. Radar systems according to embodiments herein may, therefore, generate more processed radar data (e.g., point clouds, detected object lists, etc.) per radar cycle and, therefore, may achieve greater resolution compared to radar systems that are limited to comparatively lower duty cycle operation.

FIG. 1 shows an illustrative circuit diagram representing a radar system 100, which may be an automotive radar system. As will be described radar system 100 may be operable in a first mode as a cascaded radar system in which a leader device and one or more follower devices transmit and receive radar signals (e.g., chirps and reflections), and in a second mode as a "non-cascaded" or "single-unit" radar system in which only the leader device transmits and receives radar signals while the one or more follower devices remain(s) in a standby state. In one or more embodiments, the radar system 100 may be configured to operate in the first mode during a first part of a radar cycle and may be configured to operate in the second mode during a second part of the radar cycle. Such operation may advantageously increase the duty cycle of the radar system compared to other radar systems that transmit in, for example, only half of the radar cycle.

As shown, the radar system 100 includes a leader device 102 (sometimes referred to herein as the "leader 102", "leader integrated circuit (IC) device 102", or "first IC device 102"), a follower 104 (sometimes referred to herein as the "follower 104", "follower IC device 104", or "second IC device 104"), a switch 106, a power management IC (PMIC) 108, a microcontroller unit (MCU) 109 (sometimes referred to as the "third IC device 109"), and an electronic control unit (ECU) 110. While a single follower device 104 is shown in the present example, this is intended to be illustrative and non-limiting. For example, in one or more other embodiments, the radar system 100 may include one or more additional follower devices, each having the same elements or similar elements to the follower 104 (e.g., respective RFE circuitry, transmit antennas, receive antennas, digital controller, communication bus interface, clock circuitry, packet processing engine, and the like), and each being coupled to the MCU 109 via a high speed communication bus.

The leader device 102 may include radar front-end (RFE) circuitry 112, a Packet Processing Engine (PPE) 116, memory 118, digital signal processing (DSP) circuitry 120, a real-time cluster (RTC) 122, a digital controller 124, a communication interface 126, a high speed communication interface 128, and clock generation circuitry 132. The RFE circuitry 112 may include chirp generation circuitry 114. The leader device 102 may include or may be coupled to one or more transmit (TX) antennas 140 and one or more receive (RX) antennas 142. In one or more embodiments, the leader device 102 may be a System on Chip (SoC) device, with at least the RFE circuitry 112 and the DSP circuitry 120 being integrally formed on the same semiconductor substrate.

The follower device 104 may include RFE circuitry 144, PPE 146, a digital controller 148, a high speed communication interface 150, and clock generation circuitry 152. The follower device may include or may be coupled to one or more TX antennas 154 and one or more RX antennas 156.

The MCU 109 may include a high speed communication interface 158, memory 160, DSP circuitry 162, an RTC 164, a communication interface 166, and a digital controller 168. While an MCU is used in the present example, this is intended to be illustrative and non-limiting, and it should be understood that other suitable categories of controller or processing circuitry may be used in place of the MCU 109 in accordance with one or more other embodiments. For example, in one or more other embodiments, the MCU 109 may be integrated with (e.g., included as part of) the ECU 110, with high speed interface 158 instead connecting the ECU 110 to the leader 102 and the follower 104.

Herein "DSP circuitry" may refer to computer hardware, such as computer processors having one or more processor cores, which may be configured to perform one or more digital signal processing tasks. In one or more embodiments, such DSP circuitry may include one or more processing cores or coprocessors that are optimized for carrying out digital signal processing tasks.

The PMIC 108 may control voltages supplied to the leader device 102, the follower device 104, the switch 106, the MCU 109, and the ECU 110. For example, via the bus 172, the PMIC 108 may be configured to control the power states of the leader device 102, the follower device 104, the switch 106, the MCU 109, and the ECU 110, where such power states may include a deep sleep mode, a standby mode, or a full power mode, as non-limiting examples. In one or more embodiments, the PMIC 108 may be configured to collect faults from various devices of the radar system 100 and communicate such faults to the ECU 110. In one or more embodiments, the PMIC 108 may be configured to control power up and power down sequences for the radar system 100. In one or more embodiments, the PMIC 108 may communicate with devices of the radar system 100, such as the leader device 102, the follower device 104, the switch 106, the MCU 109, and the ECU 110, via an Inter-Integrated Circuit (I2C) interface or a Serial Peripheral Interface (SPI), as non-limiting examples. In one or more embodiments, the PMIC 108 may be configured to monitor voltages (e.g., key voltages) of the radar system 100. In one embodiments, the PMIC 108 may be configured to power down the radar system 100 and may subsequently power up the radar system 100 in response to a wakeup command (e.g., provided via the switch 106 as a non-limiting example). In one or more embodiments, the PMIC 108 may be coupled between devices of the radar system 100 and the battery of a vehicle that includes the radar system 100. While the PMIC 108 is shown to be coupled to the leader device 102, the follower device 104, the switch 106, the MCU 109, and the ECU 110 via a single bus 172 in the present example, this is intended to be illustrative and non-limiting. For example, in one or more other embodiments, any suitable combination of shared or independent bus lines or other connections (e.g., which may include any suitable combinations of control lines, voltage supply lines, or the like) may be implemented to connect the PMIC 108 to the leader device 102, the follower device 104, the switch 106, the MCU 109, and the ECU 110 and, as applicable, other devices or subsystems of the radar system 100. While a single PMIC 108 is shown in the present example, it should be understood that the PMIC 108 may be implemented using a single device or multiple interconnected devices in accordance with one or more other embodiments.

The ECU 110 may include the communication interface 170 as well as processing circuitry, one or more memory devices, and one or more other communication interfaces (not shown), as non-limiting examples. The communication interface 170 may include one or more Ethernet (ETH) interfaces, one or more Controller Area Network (CAN) interfaces, or both Ethernet and CAN interfaces, as non-limiting examples. In accordance with various embodiments, the communication interface 170 may be configured to operate at rates (e.g., "bit rates") of up to 10 megabits per second (Mbps) or up to 100 Mbps, as non-limiting examples. The communication interface 170 may be coupled to receive signals (e.g., processed radar data) from an output of the switch 106. For example, the ECU 110 may receive processed radar data PRO_DATA1, PRO_DATA2 from the leader device 102 and the MCU 109, respectively, via the switch 106 at the communication interface 170. For example, the switch 106 may selectively route or otherwise provide the processed radar data PRO_DATA1 from the leader device 102 to the ECU 110 and may selectively route or otherwise provide the processed radar data PRO_DATA2 from the MCU 109 to the ECU 110. In one or more embodiments, the switch 106 may be implemented as a CAN transceiver or an ETH transceiver with two or more inputs (e.g., input CAN or ETH interfaces) and switching capabilities allowing the switch 106 to select one of its inputs such that signals received at the selected input are routed by the switch 106 to an output (e.g., an output CAN or ETH interface) of the switch 106 (and, thereby, to the ECU 110). In one or more embodiments, the ECU 110 may receive additional sensor data from one or more other sensors (e.g., cameras, lidar systems, other radar systems, or the like). The ECU 110 may be configured to perform additional processing of the processed radar data, the additional sensor data, or a combination thereof to form a coherent, and substantially real-time image or map of the environment of a vehicle that includes the radar system 100, which the ECU 110 may utilize to trigger or otherwise enable advanced driver-assistance (ADAS) features such as object detection, collision avoidance, or automatic braking, as non-limiting examples.

The radar system 100 may be configured to transmit and receive radio frequency (RF) radar signals using the leader device 102, the follower device 104, or a suitable combination thereof. The RFE circuitry 112 of the leader device 102 and the RFE circuitry 144 of the follower device 104 may have similar configurations or the same configuration in accordance with various embodiments. The RFE circuitries 112 and 144 may each include one or more transmit modules and one or more receive modules. Each transmit module may include radio frequency (RF) conditioning circuitry and power amplification circuitry (not shown). Radar signals (e.g., chirp sequences) to be transmitted via the TX antennas 140 and 154 are provided to the TX antennas 140 and 154 via the transmit modules of the RFE circuitries 112 and 144. In one or more embodiments, each RF conditioning module of the RFE circuitries 112 and 144 may include one or more frequency multipliers configured to increase the frequency of the radar signals. In one or more embodiments, each power amplifier circuitry of the RFE circuitries 112 and 144 may be configured to amplify the radar signals output by the RF conditioning module, and may provide the amplified radar signals to corresponding TX antenna(s) of the TX antennas 140 and 154 for transmission.

The radar signals (e.g., chirp sequences) transmitted by the RFE circuitries 112 and 144 may be generated based on local oscillator (LO) signals that are generated by the chirp generation circuitry 114 of the RFE circuitry 112. In one or more embodiments, the chirp generation circuitry 114 may include LO circuitry configured to generate LO signals and provide the LO signals to the transmit circuitries of the RFE circuitries 112 and 144. In one or more embodiments, the LO signals generated by the chirp generation circuitry 114 may be output by the leader 102 via a path 134. The path 134 may connect an LO output of the leader device 102 (coupled to the RFE circuitry 112) to an LO input of the leader 102 (coupled to the RFE circuitry 112) and to an LO input of the follower 104 (coupled to the RFE circuitry 144). In one or more embodiments, referring to the path 134, the path length between the LO output of the leader device 102 and the LO input of the leader device 102 may be equal to or substantially equal to the path length between the LO output of the leader device 102 and the LO input of the follower device 104 in order to minimize or otherwise reduce phase shift between the radar signals transmitted by the leader device 102 and the follower device 104.

Transmission of radar signals by the RFE circuitries 112 and 144 via the TX antennas 140 and 154, respectively, may be synchronized based on a synchronization signal SYNC that is provided by the leader device 102 at a synchronization signal output via a path 138, and that is received at synchronization signal inputs of the leader device 102 and the follower device 104. In one or more embodiments, referring to the path 138, the path length between the synchronization signal output of the leader device 102 and the synchronization signal input of the leader device 102 may be equal to or substantially equal to the path length between the synchronization signal output of the leader device 102 and the synchronization signal input of the follower device 104 in order to minimize or otherwise reduce delay between receipt of the SYNC signal by the leader device 102 and receipt of the SYNC signal the follower device 104, thereby improving synchronization between the leader device 102 and the follower device 104. In one or more embodiments, the SYNC signal (sometimes referred to as a "chirp start" signal) may trigger the start of a new radar cycle, thereby synchronizing the start of the radar cycle between the leader device 102 and the follower device 104.

In one or more embodiments, the leader device 102, the follower device 104, and the MCU 109 may operate using a shared clock signal. In one or more embodiments, an oscillator 130, which may be a crystal oscillator as a non-limiting example, may be coupled to the clock generation circuitry 132 of the leader device 102. The clock generation circuitry 132 may generate a clock signal CLK based on one or more oscillating signals received from the oscillator 130 and may generate one or more derivative clock signals based on the clock signal CLK. The clock signal CLK and the derivative clock signals may be used for clocking various circuitries of the leader device 102. The clock generation circuitry 132 may output the clock signal CLK via a CLK output that is coupled to a clock input of the leader device 102 and a clock input of the follower device via a path 136. The clock generation circuitry 152 may generate one or more derivative clock signals based on the clock signal CLK. The clock signal CLK and the derivative clock signals may be used for clocking various circuitries of the follower device 104. The clock generation circuitry 152 may pass the clock signal CLK to a clock signal input of the MCU 109. The MCU 109 may generate one or more derivative clock signals based on the clock signal CLK. The clock signal CLK and the derivative clock signals may be used for clocking various circuitries of the MCU 109. In one or more other embodiments, the clock signal CLK received by the MCU 109 may instead be provided by the clock generation circuitry 132 of the leader 102.

In one or more embodiments, referring to the path 136, the path length between the clock signal output of the leader device 102 and the clock signal input of the leader device 102 may be equal to or substantially equal to the path length between the clock signal output of the leader device 102 and the clock signal input of the follower device 104 in order to minimize or otherwise reduce delay between receipt of the clock signal CLK by the leader device 102 and receipt of the clock signal CLK the follower device 104, thereby improving clock signal synchronization between the leader device 102 and the follower device 104.

In one or more embodiments, the digital controller 168 may be coupled to the digital controller 124 of the leader device 102 and may be coupled to the digital controller 148 of the follower device 104. The digital controller 168 may be configured to send synchronization and control signals to the digital controller 124 and the digital controller 148.

One or more of the radar signals transmitted by the RFE circuitries 112 and 144 via the TX antennas 140 and 154, respectively, may be reflected by one or more objects in an environment of the radar system 100, and at least part of the reflected radar signal(s), sometimes referred to herein as "return signals," "reflections," or "echoes" may be included in an RF signal that is received by one or both of the leader device 102 and the follower device 104 via one or more of the RX antennas 142 and 156. In one or more embodiments, a reflected radar signal received via one of the RX antennas 142 and 156 corresponds to a reflection of a chirp signal transmitted via at least one of the TX antennas 140 and 154. The received reflection may include interference components attributable to one or more interference signals in the environment of the radar system 100 (e.g., with such interference signals being removed during subsequent filtering or processing). In one or more embodiments, at each receive module of the RFE circuitries 112 and 144, the received RF signal (e.g., which may include a reflected radar signal) may be amplified by a low noise amplifier (LNA) and then provided to a mixer where the received RF signal is mixed with a corresponding LO signal output by the chirp generation circuitry 114 to produce an intermediate frequency (IF) signal. In one or more embodiments, the resulting IF signal is provided to a high-pass filter (HPF) of the receive module to produce a filtered signal. In one or more embodiments, the resulting filtered signal is provided to a variable gain amplifier of the receive module, which amplifies the filtered signal before providing the resultant amplified signal to a low pass filter (LPF) of the receive module. In one or more embodiments, the LPF filters the amplified filtered signal to produce a re-filtered signal. In one or more embodiments, the re-filtered signal is provided to an analog/digital converter (ADC) included in or coupled to the receive module, which converts the re-filtered signal into a digital signal, which is then output by the receive module of the corresponding RFE circuitry (e.g., RFE circuitry 112 or 144).

Each ADC of the RFE circuitry 112 may output raw ADC samples (sometimes referred to herein as "raw ADC data" or "raw data") to the PPE 116. In the first mode, described further below, the PPE 116 may be configured to provide the raw ADC data from the RFE circuitry 112 (RAW _DATA1) to the high speed communication interface 158 of the MCU 109 via the high speed communication interface 128 and the high speed communication bus 180. In one or more embodiments, the high speed communication interface 128 may be a Camera Serial Interface-2 (CSI-2) interface. In accordance with various embodiments, the high speed communication interface 128 may be configured to operate at rates (e.g., "bit rates") of up to 2.5 gigabits per second (Gbps) or up to 10 Gbps, as non-limiting examples. In one or more embodiments, the high speed communication interface 158 may be a CSI-2 interface. In accordance with various embodiments, the high speed communication interface 158 may be configured to operate at rates (e.g., "bit rates") of up to 2.5 gigabits per second (Gbps) or up to 10 Gbps, as non-limiting examples. In one or more embodiments, the high speed communication bus 180 may be a CSI-2 serial communication link. In the second mode, describe further below, the PPE 116 may be configured to provide the raw ADC data from the RFE circuitry 112 to the memory 118 for subsequent processing by the DSP circuitry 120.

Each ADC of the RFE circuitry 144 may output raw ADC samples to the PPE 146. The PPE 146 may be configured to provide the raw ADC data from the RFE circuitry 144 (RAW _DATA2) to the high speed communication interface 158 of the MCU 109 via the high speed communication interface 150 and the high speed communication bus 178. In one or more embodiments, the high speed communication interface 150 may be a CSI-2 interface. In accordance with various embodiments, the high speed communication interface 150 may be configured to operate at rates (e.g., "bit rates") of up to 2.5 Gbps or up to 10 Gbps, as non-limiting examples. In one or more embodiments, the high speed communication bus 180 may be a CSI-2 serial communication link. It should be understood that the high speed communication interfaces 128, 150, and 158 may be considered "high speed" relative to the communication interfaces 126, 166, and 170, in one or more embodiments.

Raw ADC data provided by the RFE circuitry 112 via the PPE 116 and stored at the memory 118 may be processed by the DSP circuitry 120. The memory 118 may include non-transitory computer-readable memory, such as random access memory (RAM), as a non-limiting example. The memory 118 may be coupled to the DSP circuitry 120. The DSP circuitry 120 may be implemented via computer processing circuitry including one or more processing cores. The DSP circuitry 120 may be configured to process raw ADC samples provided by the RFE circuitry 112 and stored at the memory 118 to produce processed radar data (PRO_DATA2), which may include one or more radar point clouds or object lists corresponding to objects detected based on reflections received by the RFE circuitry 112. Examples of signal processing tasks that may be performed by the DSP circuitry 120 are described in more detail below.

The DSP circuitry 120 may be coupled to the RTC 122. The RTC 122 may be configured to provide a synchronized time base for processed radar data output by the DSP circuitry 120. The RTC 122 may be coupled to the communication interface 126. The communication interface 126 may include one or more Ethernet interfaces, one or more Controller Area Network (CAN) interfaces, or both Ethernet and CAN interfaces, as non-limiting examples. In accordance with various embodiments, the communication interface 126 may be configured to operate at rates (e.g., "bit rates") of up to 10 Mbps or up to 100 Mbps, as non-limiting examples. The communication interface 126 may be coupled to an input of the switch 106 via a communication bus 176. The communication bus 176 may be a CAN bus or an Ethernet bus, as non-limiting examples. The switch 106 may selectively pass processed radar data PRO_DATA2 provided by the leader device 102 via the communication interface 126 and communication bus 176 to the communication interface 170 of the ECU 110.

Raw ADC data provided by the RFE circuitry 112 via the PPE 116 and by the RFE circuitry 144 via the PPE 146 may be provided to the MCU 109 via the high speed communication buses 180 and 178, respectively, and may be stored at the memory 160 and then processed by the DSP circuitry 162. The memory 160 may include non-transitory computer-readable memory, such as random access memory (RAM), as a non-limiting example. The memory 160 may be coupled to the DSP circuitry 162. The DSP circuitry 162 may be implemented via computer processing circuitry including one or more processing cores. The DSP circuitry 162 may be configured to process raw ADC samples provided by the RFE circuitry 112 and the RFE circuitry 144 and stored at the memory 160 to produce processed radar data (PRO_DATA1), which may include one or more radar point clouds or object lists corresponding to objects detected based on reflections received by the RFE circuitry 112 and the RFE circuitry 144. Examples of signal processing tasks that may be performed by the DSP circuitry 162 are described in more detail below.

The DSP circuitry 162 may be coupled to the RTC 164. The RTC 164 may be configured to provide a synchronized time base for processed radar data output by the DSP circuitry 162. The RTC 164 may be coupled to the communication interface 166. The communication interface 166 may include one or more Ethernet interfaces, one or more Controller Area Network (CAN) interfaces, or both Ethernet and CAN interfaces, as non-limiting examples. In accordance with various embodiments, the communication interface 166 may be configured to operate at rates (e.g., "bit rates") of up to 10 Mbps or up to 100 Mbps, as non-limiting examples. The communication interface 166 may be coupled to an input of the switch 106 via a communication bus 174. The communication bus 174 may be a CAN bus or an Ethernet bus, as non-limiting examples. The switch 106 may selectively pass processed radar data PRO_DATA1 provided by the MCU 109 via the communication interface 166 and the communication bus 174 to the communication interface 170 of the ECU 110.

In one or more embodiments, each of the DSP circuitry 120 and the DSP circuitry 162 may be configured to process raw ADC data (e.g., raw ADC samples stored at the memory 118 and the memory 160, respectively) to generate processed radar data (e.g., PRO_DATA1 and PRO_DATA2). In one or more embodiments, each of the DSP circuitry 120 and the DSP circuitry 162 may be configured to generate processed radar data including one or more radar point clouds, object lists, or the like, corresponding to detected objects represented in the raw ADC data. In one or more embodiments, each of the DSP circuitry 120 and the DSP circuitry 162 may be configured to construct and accumulate multiple-input multiple-output (MIMO) array vector outputs forming a MIMO aperture for use in computing plots or maps for Angle of Arrival (AoA) estimation (sometimes referred to as Direction of Arrival (DoA) estimation) and object tracks. For example, upon receiving raw ADC samples from corresponding RFE circuitry (e.g., RFE circuitry 112 or RFE circuitry 144), DSP circuitry (e.g., the DSP circuitry 120 or the DSP circuitry 162) may process the raw ADC samples using one or more fast Fourier transform (FFT) modules or Discrete Fourier Transform (DFT) modules, such as a fast-time (range) FFT module and a slow-time (Doppler) FFT module.

In one or more embodiments, processing of the ADC samples by the fast-time FFT module generates a range chirp antenna cube (RCAC) and subsequent processing of the RCAC by the slow-time (Doppler) FFT module generates a range-Doppler antenna cube (RDAC), which may include, for example, range-Doppler response maps for each receive antenna associated RX antenna (e.g., associated RX antennas of the RX antennas 142, 156). The DSP circuitry (e.g., the DSP circuitry 120 or the DSP circuitry 162) may then perform Constant False Alarm Rate (CFAR) detection to detect peaks in the RDAC. The DSP circuitry (e.g., the DSP circuitry 120 or the DSP circuitry 162) may further process the RDAC based on the detected peaks to construct a MIMO array vector. The DSP circuitry (e.g., the DSP circuitry 120 or the DSP circuitry 162) may then process the MIMO array vector to perform AoA estimation, object tracking, point cloud generation, object list generation, or other suitable radar processing tasks. Processed radar data generated by the DSP circuitry 120 may be provided to the ECU 110 via the communication bus 176 and the switch 106 (e.g., as PRO_DATA2) for further processing or data handling. Processed radar data generated by the DSP circuitry 162 may be provided to the ECU 110 via the communication bus 174 and the switch 106 (e.g., as PRO _DATA1) for further processing or data handling.

The radar system 100 may be configured to operate in a first mode as a cascaded radar system and in a second mode as a single unit radar system. In one or more embodiments, the radar system 100 may be configured to operate in the first mode during a first part (e.g., first half) of each radar cycle and to operate in the second mode during a second part (e.g., second half) of each radar cycle. In one or more embodiments, in the first mode during the first part of the radar cycle, the leader device 102 and the follower device 104 are both active, and are configured to transmit one or more chirp sequences using transmit modules of the RFE circuitries 112 and 144 and the TX antennas 140 and 154 and to receive reflections corresponding to the transmitted chirp sequences via the RX antennas 142 and 156 and receive modules of the RFE circuitries 112 and 144. In one or more embodiments, in the first mode, first raw ADC samples (RAW _DATA1) generated by the RFE circuitry 112 are provided to the memory 160 of the MCU 109 via the PPE 116, the high speed communication interface 128, the high speed communication bus 180, and the high speed communication interface 158, where the memory 160 stores the first raw ADC samples for subsequent processing by the DSP circuitry 162. In one or more embodiments, in the first mode during the first part of the radar cycle, second raw ADC samples (RAW _DATA2) generated by the RFE circuitry 144 are provided to the memory 160 of the MCU 109 via the PPE 146, the high speed communication interface 150, the high speed communication bus 178, and the high speed communication interface 158, where the memory 160 stores the second raw ADC samples for subsequent processing by the DSP circuitry 162. The DSP circuitry 162 may be configured to process the raw ADC samples provided by the leader device 102 and the follower device 104 during the first and second parts of the radar cycle (e.g., with one or more signal processing tasks being performed by the DSP circuitry 162 in parallel with operation of the leader device 102 in the second mode during the second part of the radar cycle) to produce processed radar data (PRO_DATA1), which may include one or more radar point clouds or object lists, as non-limiting examples, representing one or more objects detected in the environment of the radar system 100.

In one or more embodiments, in the second mode during the second part of the radar cycle, the leader device 102 is active and the follower device 104 is inactive, and the leader device 102 is configured to transmit one or more chirp sequences using transmit modules of the RFE circuitry 112 and the TX antenna(s) and to receive reflections corresponding to the transmitted chirp sequences via the RX antenna(s) 142 and receive modules of the RFE circuitry 112. In one or more embodiments, in the second mode, raw ADC samples generated by the RFE circuitry 112 are provided to the memory 118 of the leader device 102 via the PPE 116 for subsequent processing by the DSP circuitry 120. The DSP circuitry 120 may be configured to process the raw ADC samples provided by RFE circuitry 112 during the second part of the radar cycle (e.g., with one or more signal processing tasks being performed by the DSP circuitry 120 in parallel with operation of the leader device 102 and the follower device 104 in the first mode during the first part of a subsequent radar cycle) to produce processed radar data (PRO_DATA2), which may include one or more radar point clouds or object lists, as non-limiting examples, representing one or more objects detected in the environment of the radar system 100. Processed radar data generated by the DSP circuitry 162 (e.g., PRO_DATA1) and processed radar data generated by the DSP circuitry 120 (PRO _DATA2) may be provided by the MCU 109 to the ECU 110 via the switch 106.

In one or more embodiments, the RFE circuitries 112 and 144 may be configured, in the first mode, to transmit chirp sequences providing comparatively longer range (e.g., greater than 250 m as a non-limiting example) and narrower Field of View (FOV) (e.g., less than 60 degrees as a non-limiting example) in azimuth. In one or more embodiments, the RFE circuitry 112 may be configured, in the second mode, to transmit one or more chirp sequences that provide comparatively shorter range (e.g., less than 150 m as a non-limiting example) and wider FOV (e.g., greater than 120 degrees as a non-limiting example) in azimuth. In one or more such embodiments, the first mode may be a "high angular resolution" mode and the second mode may be a "low angular resolution mode" due, at least in part, to the amount of RX antennas utilized being greater in the first mode compared to the second mode. Angular resolution may also be determined based on antenna beamwidth, wavelength, and distance between RX antennas, as non-limiting examples. It should be understood that higher angular resolution values correspond to lower angular resolution and that lower angular resolution values correspond to higher angular resolution. For example, a radar sensor with 2 degree resolution is considered to have higher resolution than a radar sensor with 4 degree resolution. It should be understood that transmitting chirp sequences with different chirp parameters in this way is intended to be illustrative and non-limiting. In one or more other embodiments, for example, the chirp parameters of transmitted chirp sequences may instead be the same or substantially the same in the first mode and in the second mode.

By operating in the first mode during the first part of the radar cycle and operating in the second mode during the second part of the radar cycle, the radar system may be active (e.g., actively transmitting and receiving radar signals) for 100% or substantially 100% of the radar cycle, such that the radar system 100 may operate with a 100% duty cycle during the radar cycle. Some conventional cascaded radar systems only transmit and receive radar signals during half the radar cycle (thus operating at a 50% duty cycle), and may only generate one set of processed radar data per radar cycle. In comparison, in one or more embodiments in which the radar system 100 is configured to operate in the first mode in the first part of the radar cycle and is configured to operate in the second mode in the second part of the radar cycle, the radar system 100 may generate two sets of processed radar data (e.g., PRO_DATA1 and PRO_DATA2) in a single radar cycle (e.g., as illustrated in the example of FIG. 3, described below).

Further, the increase in cost, power dissipation, and footprint attributable to the DSP circuitry 120 and related circuitry of the leader device 102 may be relatively small compared to, for example, the increase in cost, power dissipation, and footprint that would result from adding a second stand-alone MCU to the radar system 100. Accordingly, the radar system 100 may provide a more compact solution compared to fully redundant radar systems that require multiple MCUs.

FIG. 2 shows a timing diagram 200 representing operation of a radar system, such as the radar system 100 of FIG. 1, that is configured to operate in a single mode as a cascaded radar system. As shown, operation of a radar system according to the timing diagram 200 includes transmitting and receiving radar signals during the first part (e.g., time periods T1 and T4) of each radar cycle using a leader device and a follower device, and placing the leader and follower device in a standby state during a second part (time periods T2 and T5) of the radar cycle to allow an MCU to finish processing radar data (e.g., raw ADC samples) that was generated during the first part of the radar cycle. Operating a radar system according to the timing diagram 200 may result in the radar system having a 50 percent duty cycle (when T1=T2) in each radar cycle. The timing diagram 200 of the present example is described below with reference to the radar system 100 of FIG. 1 and elements thereof. In the timing diagram 200, the time periods T1 and T2 collectively correspond to a first radar cycle, the time periods T4 and T5 collectively correspond to a second radar cycle, and the time periods T3 and T6 correspond to respective idle periods between radar cycles during which Built-In Self-Test (BIST) or Functional Safety (FuSa) processes may be performed. In one or more embodiments, the time periods T1, T2, T4, and T5 may each have a duration of around 18 milliseconds (ms) and the time periods T3 and T6 may each have a duration of around 2 ms.

In the timing diagram 200, row 202 represents radar signals transmitted by the leader device 102 and separately indicates when the leader device 102 is in a standby state or an idle state. Row 204 represents raw data (e.g., raw ADC samples) output by the RFE circuitry 112 of the leader device 102. Row 206 represents radar signals transmitted by the follower device 104 and separately indicates when the follower device 104 is in a standby state or an idle state. Row 208 represents raw data (e.g., raw ADC samples) output by the RFE circuitry 144 of the follower device 104. Row 210 represents signal processing tasks performed by the DSP circuitry 162 of the MCU 109.

During a first time period T1, the leader device 102 and the follower device 104 of the radar system 100 are each configured to transmit respective chirp sequences according to a first set of parameters (e.g., chirp interval time, chirp slope, and other suitable parameters). During the time period T1, reflections corresponding to the transmitted chirp sequences are received by the leader device 102 and the follower device 104 (e.g., via the RX antennas 142 and 156 and receive modules of the RFE circuitries 112 and 144), and are converted by the RFE circuitries 112 and 144 into raw ADC samples. The leader device 102 sends the raw ADC samples generated by the RFE circuitry 112 during the time period T1 to the MCU 109 as RAW_DATA1_A for processing by the DSP circuitry 162. The follower device 104 sends the raw ADC samples generated by the RFE circuitry 144 during the time period T1 to the MCU 109 as RAW_DATA2_A for processing by the DSP circuitry 162. During the time period T1, the DSP circuitry 162 of the MCU 109 begins processing the raw ADC samples. In one or more embodiments, during the time period T1, the DSP circuitry 162 of the MCU 109 may perform a first FFT, denoted FFT1 and corresponding to a fast-time (range) FFT, on the raw ADC samples to produce an RCAC.

During a second time period T2, the DSP circuitry 162 of the MCU 109 continues processing the raw ADC samples generated during the time period T1, while the leader device 102 and the follower device 104 are each set to a standby state. The time required for the MCU 109 to process the radar data generated during the time period T1 is often a bottleneck, such that more time is required for the MCU 109 to process the radar data exceeds the duration of the time period T1. In one or more embodiments, during the time period T2, the DSP circuitry 162 may perform a second FFT, denoted FFT2 and corresponding to a slow-time (Doppler) FFT, on the RCAC to produce an RDAC, then may perform DoA estimation and tracking processes based on the RDAC to generate processed radar data 212. It should be understood that the present example is intended to be illustrative and non-limiting, such that other signal processing tasks in addition to the FFT1, FFT2, DoA estimation, and tracking processes shown may be performed to generate the processed radar data in accordance with various other embodiments.

During a third time period T3, the DSP circuitry 162 may output the processed radar data 212 (e.g., which may include a point cloud or list of detected objects) while the leader device 102 and the follower device 104 are in an idle state. For example, the DSP circuitry 162 may provide the processed radar data 212 to the ECU 110 for further processing. In one or more embodiments, the radar system 100 may be configured to perform one or more BIST processes or FuSa processes during the third time period T3.

During a fourth time period T4, the leader device 102 and the follower device 104 of the radar system 100 are each configured to transmit respective chirp sequences according to a second set of parameters (e.g., chirp interval time, chirp slope, and other suitable parameters). In one or more embodiments, the second set of parameters is different from the first set of parameters. In one or more embodiments, chirp sequences generated according to the first set of parameters correspond to a longer range and narrower field of view compared to chirp sequences generated according to the second set of parameters. During the time period T4, reflections corresponding to the transmitted chirp sequences are received by the leader device 102 and the follower device 104 (e.g., via the RX antennas 142 and 156 and receive modules of the RFE circuitries 112 and 144), and are converted by the RFE circuitries 112 and 144 into raw ADC samples. The leader device 102 sends the raw ADC samples generated by the RFE circuitry 112 during the time period T4 to the MCU 109 as RAW _DATA1_B for processing by the DSP circuitry 162. The follower device sends the raw ADC samples generated by the RFE circuitry 144 during the time period T1 to the MCU 109 as RAW _DATA2_B for processing by the DSP circuitry 162. During the time period T4, the DSP circuitry 162 of the MCU 109 begins processing the raw ADC samples. In one or more embodiments, during the time period T4, the DSP circuitry 162 of the MCU 109 may perform a fast-time FFT process (FFT1) on the raw ADC samples.

During a fifth time period T5, the DSP circuitry 162 of the MCU 109 continues processing the raw ADC samples generated during the time period T4, performing signal processing tasks, such as FFT2, DoA estimation, and tracking processes similar to those described above, alone or in addition to other suitable signal processing tasks, to generate processed radar data 214, while the leader device 102 and the follower device 104 are each set to a standby state.

During a sixth time period T6, the DSP circuitry 162 may output the processed radar data 214 while the leader device 102 and the follower device 104 are in an idle state. For example, the DSP circuitry 162 may provide the processed radar data 214 to the ECU 110 for further processing. In one or more embodiments, the radar system 100 may be configured to perform one or more Built-In-Self-Test processes or FuSa processes during the sixth time period T6.

FIG. 3 shows an illustrative timing diagram 300 representing operating of a radar system, such as the radar system 100 of FIG. 1, that is configured to operate in a first mode as a cascaded radar system and in a second mode as a single-unit radar system. Operation of such a radar system according to the timing diagram 300 may result in a 100 percent duty cycle for radar signal transmission in each radar cycle. The timing diagram 300 is described with reference to the radar system 100 of FIG. 1. However, it should be understood that this is intended to be illustrative and non-limiting, such that other suitable radar systems may operate in accordance with the timing diagram 300. In the timing diagram 300, the time periods T1 and T2 collectively correspond to a first radar cycle, the time periods T4 and T5 collectively correspond to a second radar cycle, and the time periods T3 and T6 correspond to respective idle periods between radar cycles during which BIST or FuSa processes may be performed. In one or more embodiments, the time periods T1, T2, T4, and T5 may each have a duration of around 18 milliseconds (ms) and the time periods T3 and T6 may each have a duration of around 2 ms.

In the timing diagram 300, row 302 represents radar signals transmitted by the leader device 102. Row 304 represents raw data (e.g., raw ADC samples) output by the RFE circuitry 112 of the leader device 102 to the MCU 109 in the first mode. Row 306 represents raw data (e.g., raw ADC samples) output by the RFE circuitry 112 of the leader device 102 to the memory 118 in the second mode. Row 308 represents signal processing tasks performed by the DSP circuitry 120 of the leader device 102. Row 310 represents radar signals transmitted by the follower device 104 and separately indicates when the follower device 104 is in a standby state or an idle state. Row 312 represents raw data (e.g., raw ADC samples) output by the RFE circuitry 144 of the follower device 104. Row 314 represents signal processing tasks performed by the DSP circuitry 162 of the MCU 109.

During a first time period T1, the radar system 100 operates in the first mode in which the leader device 102 and the follower device 104 are each configured to transmit respective chirp sequences according to a first set of parameters (e.g., chirp interval time, chirp slope, and other suitable parameters). During the time period T1, reflections corresponding to the transmitted chirp sequences are received by the leader device 102 and the follower device 104 (e.g., via the RX antennas 142 and 156 and receive modules of the RFE circuitries 112 and 144), and are converted by the RFE circuitries 112 and 144 into raw ADC samples. The leader device 102 sends the raw ADC samples generated by the RFE circuitry 112 during the time period T1 to the MCU 109 as RAW_DATA1_A for processing by the DSP circuitry 162. The follower device 104 sends the raw ADC samples generated by the RFE circuitry 144 during the time period T1 to the MCU 109 as RAW_DATA2_A for processing by the DSP circuitry 162. During the time period T1, the DSP circuitry 162 of the MCU 109 begins processing the raw ADC samples. In one or more embodiments, during the time period T1, the DSP circuitry 162 of the MCU 109 may perform a first FFT, denoted FFT1 and corresponding to a fast-time (range) FFT, on the raw ADC samples to produce an RCAC.

During a second time period T2, the radar system 100 operates in the second mode, in which the follower device 104 is set to a standby state and the leader device 102 transmits a chirp sequence according to a second set of parameters. In one or more embodiments, the second set of parameters is different from the first set of parameters. In one or more such embodiments, chirp sequences generated according to the first set of parameters provide a longer range and narrower field of view compared to chirp sequences generated according to the second set of parameters. In one or more other embodiments, the second set of parameters may be the same as the first set of parameters. During the time period T2, reflections corresponding to the chirp sequences transmitted by the leader device 102 during the time period T1 are received by the leader device 102 (e.g., via the RX antennas 142 and receive module(s) of the RFE circuitry 112), and are converted by the RFE circuitry 112 into raw ADC samples. The RFE circuitry 112 sends the raw ADC samples generated during time period T2 to the memory 118 as RAW_DATA3_A for subsequent processing by the DSP circuitry 120. During the time period T2, the DSP circuitry 120 of the leader device 102 begins processing the raw ADC samples generated during time period T2. In one or more embodiments, during the time period T2, the DSP circuitry 120 may perform a fast-time FFT process (FFT1) on the raw ADC samples (RAW_DATA3_A) to produce an RCAC.

Also during the time period T2, the DSP circuitry 162 of the MCU 109 continues processing the raw ADC samples that were generated by the RFE circuitries 112 and 144 during the time period T1. In one or more embodiments, during the time period T2, the DSP circuitry 162 may perform a second FFT, denoted FFT2 and corresponding to a slow-time (Doppler) FFT, on the RCAC that was generated by the DSP circuitry 162 during the time period T1, where the slow-time FFT processing of the RCAC produces an RDAC. The DSP circuitry 162 may then perform DoA estimation and tracking processes based on the RDAC to generate processed radar data 320. In one or more embodiments, the tracking process(es) include applying, by the RTC 164, timestamps to one or more elements of the data being processed. It should be understood that the present example is intended to be illustrative and non-limiting, such that other signal processing tasks in addition to the FFT1, FFT2, DoA estimation, and tracking processes shown may be performed to generate the processed radar data in accordance with various other embodiments.

During a third time period T3, the DSP circuitry 120 of the leader device 102 may continue processing the raw ADC samples that were generated by the RFE circuitry 112 during the time period T2. For example, the DSP circuitry 120 may perform at least part of a slow-time FFT process (FFT2) on the RCAC resulting from the fast time FFT process (FFT1) performed by the DSP circuitry 120 during the time period T2.

During the time period T3, the DSP circuitry 162 may output the processed radar data 320. For example, the DSP circuitry 162 may provide the processed radar data 320 to the ECU 110 for further processing or data handling. In one or more embodiments, the radar system 100 may be configured to perform one or more BIST processes or FuSa processes during the third time period T3.

During a fourth time period T4, the radar system 100 operates in the first mode in which the leader device 102 and the follower device 104 are each configured to transmit respective chirp sequences according to the first set of parameters. During the time period T4, reflections corresponding to the transmitted chirp sequences are received by the leader device 102 and the follower device 104 (e.g., via the RX antennas 142 and 156 and receive modules of the RFE circuitries 112 and 144), and are converted by the RFE circuitries 112 and 144 into raw ADC samples. The leader device 102 sends the raw ADC samples generated by the RFE circuitry 112 during the time period T4 to the MCU 109 as RAW_DATA1_B for processing by the DSP circuitry 162. The follower device 104 sends the raw ADC samples generated by the RFE circuitry 144 during the time period T4 to the MCU 109 as RAW_DATA2_B for processing by the DSP circuitry 162. During the time period T4, the DSP circuitry 162 of the MCU 109 begins processing the raw ADC samples generated by the leader and follower devices 102 and 104 during the time period T4. In one or more embodiments, during the time period T4, the DSP circuitry 162 of the MCU 109 may perform a fast-time FFT process (FFT1) on these raw ADC samples.

In the fourth time period T4, the DSP circuitry 120 of the leader device 102 may continue processing the raw ADC samples that were generated during the time period T2 by the RFE circuitry 112. For example, the DSP circuitry 120 may complete the FFT2 process (begun during time period T3, in one or more embodiments) to generate an RDAC and may then perform DoA estimation and tracking processes based on the RDAC to produce processed radar data 316. For example, the DSP circuitry 120 may provide the processed radar data 316 to the ECU 110 for further processing or data handling at or near the end of the time period T4.

During a fifth time period T5, the radar system 100 operates in the second mode, in which the follower device 104 is set to a standby state and the leader device 102 transmits a chirp sequence according to the second set of parameters. During the time period T5, reflections corresponding to the transmitted chirp sequences during the time period T4 are received by the leader device 102 (e.g., via the RX antennas 142 and receive module(s) of the RFE circuitry 112), and are converted by the RFE circuitry 112 into raw ADC samples. The RFE circuitry 112 sends the raw ADC samples generated by the RFE circuitry 112 during the time period T5 to the memory 118 as RAW_DATA3_B for processing by the DSP circuitry 120. During the time period T5, the DSP circuitry 120 of the leader device 102 begins processing the raw ADC samples provided by the RFE circuitry 112 during the time period T5. In one or more embodiments, during the time period T2, the DSP circuitry 120 may perform a fast-time FFT process (FFT1) on the raw ADC samples (RAW_DATA3_A) to produce an RCAC.

Also in the time period T5, the DSP circuitry 162 of the MCU 109 continues processing the raw ADC samples generated by the leader device 102 and the follower device 104 during the time period T4, performing signal processing tasks, such as FFT2, DoA estimation, and tracking processes similar to those described above, alone or in addition to other suitable signal processing tasks, to generate processed radar data 322.

During a sixth time period T6, the DSP circuitry 120 of the leader device 102 may continue processing the raw ADC samples that were generated by the RFE circuitry 112 during the time period T5. For example, the DSP circuitry 120 may perform at least part of the slow-time FFT process (FFT2) on the RCAC resulting from the fast time FFT process (FFT1) performed by the DSP circuitry 120 during the time period T5. During the time period T6, the DSP circuitry 162 may output the processed radar data 322. For example, the DSP circuitry 162 may provide the processed radar data 322 to the ECU 110 for further processing or data handling. In one or more embodiments, the radar system 100 may be configured to perform one or more BIST processes or FuSa processes during the third time period T6.

DSP circuitry 120 may continue processing the raw ADC samples that were generated during the time period T5 in a subsequent radar cycle immediately following the time period T6 (e.g., the radar cycle following the radar cycle of time periods T4 and T5). For example, in the subsequent radar cycle, the DSP circuitry may complete the FFT2 process (begun during time period T6, in one or more embodiments) to generate an RDAC and may then perform DoA estimation and tracking processes based on the RDAC to produce processed radar data 318. For example, the DSP circuitry 120 may provide the processed radar data 318 to the ECU 110 for further processing or data handling during the subsequent radar cycle.

Compared to the method of operation represented by the timing diagram 200 of FIG. 2, the method of operation represented by the timing diagram 300 has a greater duty cycle (e.g., 100 percent duty cycle versus 50 percent duty cycle). By operating the radar system 100 in this way (e.g., with an increased duty cycle), the angular resolution of the processed radar data generated by the radar system 100 may be advantageously increased, while radar sensor availability and overall performance of the radar system may be improved.

FIG. 4 shows a process flow for a method 400 for operating a radar system in a first mode during a first part of each radar cycle and in a second mode during a second part of each radar cycle, such that the radar system operates with a full (e.g., 100%) duty cycle. During the first part of each radar cycle, the radar system may be configured to operate in the first mode in which the leader and follower devices transmit and receive radar signals (e.g., chirp sequences). During the second part of each radar cycle, the radar system may be configured to operate in the second mode in which only the leader device transmits and receives radar signals (e.g., chirp sequences) while the follower device is in a standby state. Raw ADC samples generated in the first mode may be processed by DSP circuity of an MCU that is coupled to the leader and follower devices. Raw ADC samples generated in the second mode may be processed by DSP circuitry that is included in the leader device. In one or more embodiments, the method 400 may be performed by a radar system such as the radar system 100 of FIG. 1. In one or more embodiments, one or more steps of the method 400 may be performed according to the timing diagram 300 of FIG. 3. The method 400 is described below with reference to elements of the radar system 100 of FIG. 1. However, it should be understood that reference to the radar system 100 is intended to be illustrative and non-limiting, such that other suitable radar systems may be used to carry out the method 400 in one or more other embodiments.

At block 402, the radar system 100 starts a new radar cycle.

At block 404, during a first part of the radar cycle, the radar system 100 operates in the first mode in which the leader device 102 and the follower device 104, using the RFE circuitries 112 and 144 and the TX antennas 140 and 154, transmit chirp sequences according to first set of parameters (e.g., chirp interval time, chirp slope, and other suitable parameters) and, using the RFE circuitries 112 and 144 and the RX antennas 142 and 156, receive corresponding reflections. The RFE circuitry 112 of the leader device 102 and the RFE circuitry 144 of the follower device 104 may each generate raw data, which may include raw ADC samples, based on the received reflections. The leader device 102 and the follower device 104 may provide the raw data to the MCU 109 for processing by the DSP circuitry 162.

At block 406, the DSP circuitry 162 of the MCU 109 processes the raw data generated by the RFE circuitries 112 and 144 of the leader device 102 and the follower device 104 at block 404. For example, DSP circuitry 162 of the MCU 109 may process raw ADC samples generated by the RFE circuitries 112 and 144 of the leader device 102 and the follower device 104 by performing fast-time FFT, slow-time FFT, DoA estimation, and tracking processes to generate processed radar data. Block 406 may be performed in parallel with at least blocks 410 and 416.

At block 408, the MCU 109 provides the processed radar data generated at block 406 to the ECU 110 for further processing or data handling. Block 408 may be performed at least partly in parallel with block 420.

At block 410, during a second part of the radar cycle, the radar system 100 operates in the second mode in which the leader device 102, using the RFE circuitry 112 and the TX antennas 140, transmits one or more chirp sequences according to second set of parameters (e.g., (e.g., chirp interval time, chirp slope, and other suitable parameters) and, using the RFE circuitry 112 and the RX antenna 142, receives corresponding reflections. In one or more embodiments, the second set of parameters is different from the first set of parameters. In one or more such embodiments, chirp sequences generated according to the first set of parameters provide a longer range and narrower field of view compared to chirp sequences generated according to the second set of parameters. In one or more other embodiments, the second set of parameters may be the same as the first set of parameters. The RFE circuitry 112 of the leader device 102 may generate raw data, which may include raw ADC samples, based on the received reflections. The RFE circuitry 112 of the leader device 102 may provide the raw data to the memory 118 of the leader device 102 for processing by the DSP circuitry 120. Block 410 may be performed in parallel with at least blocks 406 and 416.

In one or more embodiments, the first part of the radar cycle and the second part of the radar cycle, in combination, span the entire radar cycle, such that the radar system transmits radar signals with a 100% duty cycle. In one or more embodiments, the first part of the radar cycle may have the same or substantially the same duration as the second part of the radar cycle.

At block 412, the DSP circuitry 120 processes the raw data generated by the RFE circuitry 112 of the leader device 102 at block 410. For example, DSP circuitry 120 may process raw ADC samples generated by RFE circuitry 112 of the leader device 102 by performing fast-time FFT, slow-time FFT, DoA estimation, and tracking processes to generate processed radar data. Block 412 may be performed partly in the same radar cycle in which the raw data is generated by the RFE circuitry 112 of the leader device 102 and partly in a subsequent radar cycle. Each set of processed radar data may include one or more point clouds or object lists corresponding to one or more detected objects in an environment of the radar system, in accordance with one or more embodiments.

At block 414, the leader device 102 provides the processed radar data generated at block 412 to the ECU 110 for further processing or data handling. Block 414 may be performed in the subsequent radar cycle.

At block 416, in the second part of the radar cycle while the radar system 100 is configured to operate in the second mode, the follower device 104 is set to a standby state. In the standby state, the follower device 104 does not transmit or receive radar signals. Block 416 may be performed in parallel with at least blocks 406 and 410.

At block 418, the current radar cycle ends.

At block 420, following the end of the radar cycle, the radar system 100 may be idle or may perform any suitable combination of BIST processes or FuSa processes. Following block 420, the method 400 returns to block 402 and a new radar cycle begins. In one or more embodiments, processing of raw data at block 412 and outputting processed radar data at block 414 may be performed, at least in part, during the new radar cycle.

Various exemplary embodiments are presented below. Some simplifications and omissions may be made in the following examples, which are intended to highlight and introduce some aspects of the various exemplary embodiments, without limiting the scope.

In an example embodiment, a system includes a first integrated circuit device including first radar front-end (RFE) circuitry and first digital signal processing (DSP) circuitry coupled to the first RFE circuitry, a second integrated circuit device including second RFE circuitry, and a third integrated circuit device coupled to the first integrated circuit device and the second integrated circuit device, the third integrated circuit device including second DSP circuitry. The system is configured to transmit radar signals in a plurality of radar cycles, and, in a radar cycle of the plurality of radar cycles, the system is configured to operate in a first mode during a first part of the radar cycle and is configured to operate in a second mode during a second part of the radar cycle. In the first mode, the first RFE circuitry of the first integrated circuit device and the second RFE circuitry of the second integrated circuit device are configured to transmit first radar signals. In the second mode, the first RFE circuitry of the first integrated circuit device is configured to transmit second radar signals while the second integrated circuit device is in a standby state.

In one or more embodiments, the first RFE circuitry and the first DSP circuitry are disposed on the same integrated circuit die.

In one or more embodiments, the first radar signals include a first chirp sequence generated according to a first set of parameters, and the second radar signals include a second chirp sequence generated according to a second set of parameters that are different from the first set of parameters.

In one or more embodiments, the first chirp sequence provides a first range that is greater than a first range provided by the second chirp sequence and a first field of view (FOV) that is less than a second FOV provided by the second chirp sequence.

In one or more embodiments, in the first mode, the first RFE circuitry of the first integrated circuit device and the second RFE circuitry of the second integrated circuit device are configured to receive first reflections of the first radar signals, the first RFE circuitry is configured to generate first raw analog-to-digital converter (ADC) samples based on the first reflections, the second RFE circuitry is configured to generate second raw ADC samples based on the first reflections, and the second DSP circuitry is configured to receive and process the first and second raw ADC samples to produce first processed radar data.

In one or more embodiments, in the second mode, the first RFE circuitry is configured to receive second reflections of the second radar signals, the first RFE circuitry is configured to generate third raw ADC samples based on the second reflections, and the first DSP circuitry is configured to receive and process the third ADC samples to produce second processed radar data.

In one or more embodiments, the second DSP circuitry is configured to process the first and second raw ADC samples during both the first and second parts of the radar cycle, and the first DSP circuitry is configured to process the third raw ADC samples during the second part of the radar cycle and in at least a portion of a subsequent radar cycle.

In one or more embodiments, the first part of the radar cycle and the second part of the radar cycle collectively cover the entire radar cycle, such that transmitting the first radar signals in the first mode during the first part of the radar cycle and transmitting the second radar signals in the second mode during the second part of the radar cycle results in a 100 percent duty cycle for radar signal transmission during the radar cycle.

In one or more embodiments, the system further includes an electronic control unit (ECU) coupled to the first integrated circuit device and to the third integrated circuit device, and a switch coupled between the first integrated circuit device and the ECU and coupled between the third integrated circuit device and the ECU, and the switch is configured to selectively route the first processed radar data from the third integrated circuit device to the ECU and to selectively route the second processed radar data from the first integrated circuit device to the ECU.

In one or more embodiments, the first RFE circuitry is configured to provide the first raw ADC samples to the third integrated circuit device via a first communication interface and a first bus, the second RFE circuitry is configured to provide the second raw ADC samples to the third integrated circuit device via a second communication interface and a second bus, the first DSP circuitry is configured to provide the second processed radar data to the ECU via a third communication interface and a third bus, and the second DSP circuitry is configured to provide the first processed radar data to the ECU via a fourth bus, and the first and second communication interfaces are each configured to operate at higher bit rate than either of the third and fourth communication interfaces.

In an example embodiment, a method includes transmitting, by a leader device and a follower device of a radar system in a first mode during a first part of a radar cycle, first radar signals, and transmitting, by the leader device in a second mode during a second part of the radar cycle, second radar signals while the follower device is in a standby state.

In one or more embodiments, the first radar signals include a first chirp sequence generated according to a first set of parameters, and the second radar signals include a second chirp sequence generated according to a second set of parameters that are different from the first set of parameters.

In one or more embodiments, the first chirp sequence provides a first range that is greater than a first range provided by the second chirp sequence, and a first field of view (FOV) that is less than a second FOV provided by the second chirp sequence.

In one or more embodiments, the method further includes receiving, by the leader device and the follower device in the first mode during the first part of the radar cycle, first reflections of the first radar signals, generating, by the leader device, first raw analog-to-digital converter (ADC) samples based on the first reflections, generating, by the follower device, second raw ADC samples based on the first reflections, processing, by a microcontroller unit (MCU) coupled to the leader device and the follower device, the first and second raw ADC samples to produce first processed radar data.

In one or more embodiments, the method further includes receiving, by the leader device in the second mode during the second part of the radar cycle, second reflections of the second radar signals, generating, by the leader device, third raw ADC samples based on the third reflections, and processing, by the leader device, the third raw ADC samples to generate second processed radar data.

In one or more embodiments, processing the third raw ADC samples to generate the second processed radar data is performed by first DSP circuitry of the leader device during the second part of the radar cycle and in at least a portion of a subsequent radar cycle, and processing of the first and second ADC samples by the MCU is performed by second DSP circuitry of the MCU during the first and second parts of the radar cycle.

In one or more embodiments, transmitting the first radar signals during the first part of the radar cycle and transmitting the second radar signals during the second part of the radar cycle results in a 100 percent duty cycle for transmission of radar signals during the radar cycle.

In one or more embodiments, the method further includes providing, by the leader device, the first raw ADC samples to the MCU via a first communication interface and a first bus, providing, by the follower device, the second raw ADC samples to the MCU via a second communication interface and a second bus, providing, by the leader device, the second processed radar data to an electronic control unit (ECU) via a switch, a third communication interface, and a third bus, and providing, by the MCU, the first processed radar data to the ECU via the switch, a fourth communication interface, and a fourth bus.

In one or more embodiments, the first processed radar data and the second processed radar data each include at least one of a point cloud or an object list corresponding to one or more detected objects.

In an example embodiment, radar system includes a leader device including first radar front-end (RFE) circuitry and first digital signal processing (DSP) circuitry coupled to the first RFE circuitry, where the first RFE circuitry and the first DSP circuitry are disposed on the same integrated circuit die, at least one follower device including second RFE circuitry, and a microcontroller unit (MCU) coupled to the leader device and the at least one follower device, the MCU including second DSP circuitry. The radar system is configured to transmit radar signals in a plurality of radar cycles, and, in a radar cycle of the plurality of radar cycles, the radar system is configured to operate in a first mode during a first part of the radar cycle and is configured to operate in a second mode during a second part of the radar cycle. In the first mode, the first RFE circuitry of the leader device and the second RFE circuitry of the at least one follower device are configured to transmit first radar signals. In the second mode, the first RFE circuitry of the leader device is configured to transmit second radar signals while the at least one follower device is in a standby state. The second DSP circuitry of the MCU is configured to generate first processed radar data based on reflections of the first radar signals. The first DSP circuitry of the leader device is configured to generate second processed radar data based on reflections of the second radar signals.

Although the operations of the method(s) herein are shown and described in a particular order, the order of the operations of each method may be altered so that certain operations may be performed in an inverse order or so that certain operations may be performed, at least in part, concurrently with other operations. In one or more other embodiments, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limited to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

While at least one exemplary embodiment has been presented in the foregoing detailed description, it should be appreciated that a vast number of variations exist. It should also be appreciated that exemplary embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system comprising:
a first integrated circuit device comprising:
first radar front-end, RFE, circuitry; and
first digital signal processing, DSP, circuitry coupled to the first RFE circuitry;
a second integrated circuit device comprising second RFE circuitry; and
a third integrated circuit device coupled to the first integrated circuit device and the second integrated circuit device, the third integrated circuit device comprising second DSP circuitry,
wherein the system is configured to transmit radar signals in a plurality of radar cycles, and, in a radar cycle of the plurality of radar cycles, the system is configured to operate in a first mode during a first part of the radar cycle and is configured to operate in a second mode during a second part of the radar cycle,
wherein, in the first mode, the first RFE circuitry of the first integrated circuit device and the second RFE circuitry of the second integrated circuit device are configured to transmit first radar signals, and
wherein, in the second mode, the first RFE circuitry of the first integrated circuit device is configured to transmit second radar signals while the second integrated circuit device is in a standby state.

2. The system of claim 1, wherein the first RFE circuitry and the first DSP circuitry are disposed on the same integrated circuit die.

3. The system of claim 1 or 2, wherein the first radar signals comprise a first chirp sequence generated according to a first set of parameters, and the second radar signals comprise a second chirp sequence generated according to a second set of parameters that are different from the first set of parameters.

4. The system of claim 3, wherein the first chirp sequence provides a first range that is greater than a first range provided by the second chirp sequence and a first field of view (FOV) that is less than a second FOV provided by the second chirp sequence.

5. The system of any preceding claim, wherein, in the first mode, the first RFE circuitry of the first integrated circuit device and the second RFE circuitry of the second integrated circuit device are configured to receive first reflections of the first radar signals, the first RFE circuitry is configured to generate first raw analog-to-digital converter, ADC, samples based on the first reflections, the second RFE circuitry is configured to generate second raw ADC samples based on the first reflections, and the second DSP circuitry is configured to receive and process the first and second raw ADC samples to produce first processed radar data.

6. The system of claim 5, wherein, in the second mode, the first RFE circuitry is configured to receive second reflections of the second radar signals, the first RFE circuitry is configured to generate third raw ADC samples based on the second reflections, and the first DSP circuitry is configured to receive and process the third ADC samples to produce second processed radar data.

7. The system of claim 6, wherein the second DSP circuitry is configured to process the first and second raw ADC samples during both the first and second parts of the radar cycle, and the first DSP circuitry is configured to process the third raw ADC samples during the second part of the radar cycle and in at least a portion of a subsequent radar cycle.

8. The system of any preceding claim, wherein the first part of the radar cycle and the second part of the radar cycle collectively cover the entire radar cycle, such that transmitting the first radar signals in the first mode during the first part of the radar cycle and transmitting the second radar signals in the second mode during the second part of the radar cycle results in a 100 percent duty cycle for radar signal transmission during the radar cycle.

9. The system of any or claims 6 to 8, further comprising:
an electronic control unit, ECU, coupled to the first integrated circuit device and to the third integrated circuit device; and
a switch coupled between the first integrated circuit device and the ECU and coupled between the third integrated circuit device and the ECU, wherein the switch is configured to selectively route the first processed radar data from the third integrated circuit device to the ECU and to selectively route the second processed radar data from the first integrated circuit device to the ECU.

10. The system of claim 9, wherein the first RFE circuitry is configured to provide the first raw ADC samples to the third integrated circuit device via a first communication interface and a first bus, the second RFE circuitry is configured to provide the second raw ADC samples to the third integrated circuit device via a second communication interface and a second bus, the first DSP circuitry is configured to provide the second processed radar data to the ECU via a third communication interface and a third bus, and the second DSP circuitry is configured to provide the first processed radar data to the ECU via a fourth bus, wherein the first and second communication interfaces are each configured to operate at higher bit rate than either of the third and fourth communication interfaces.

11. A method comprising:
transmitting, by a leader device and a follower device of a radar system in a first mode during a first part of a radar cycle, first radar signals; and
transmitting, by the leader device in a second mode during a second part of the radar cycle, second radar signals while the follower device is in a standby state.

12. The method of claim 11, wherein the first radar signals comprise a first chirp sequence generated according to a first set of parameters, and the second radar signals comprise a second chirp sequence generated according to a second set of parameters that are different from the first set of parameters.

13. The method of claim 12, wherein the first chirp sequence provides a first range that is greater than a first range provided by the second chirp sequence, and a first field of view, FOV, that is less than a second FOV provided by the second chirp sequence.

14. The method of any of claims 11 to 13, further comprising:
receiving, by the leader device and the follower device in the first mode during the first part of the radar cycle, first reflections of the first radar signals;
generating, by the leader device, first raw analog-to-digital converter, ADC samples based on the first reflections;
generating, by the follower device, second raw ADC samples based on the first reflections; and
processing, by a microcontroller unit, MCU, coupled to the leader device and the follower device, the first and second raw ADC samples to produce first processed radar data.

15. The method of claim 14, further comprising:
receiving, by the leader device in the second mode during the second part of the radar cycle, second reflections of the second radar signals;
generating, by the leader device, third raw ADC samples based on the third reflections; and
processing, by the leader device, the third raw ADC samples to generate second processed radar data.
